# EUROPEAN PATENT SPECIFICATION

(11) **EP 1 580 941 B1**
(45) Date of publication and mention of the grant of the patent: **30.08.2006**
(21) Application number: 05251260.5
(22) Date of filing: 02.03.2005
(51) Int. Cl.: H04L 12/56

(54) **Method of operating sensor net and sensor apparatus**
Verfahren zum Betreiben von Sensornetzwerken und Sensorgeräten
Procédé de fonctionnement d'un réseau de capteurs et d'appareils de détection

(30) Priority: 23.03.2004 US 807070
(43) Date of publication of application: 28.09.2005
(73) Proprietor: Agilent Technologies Inc, Palo Alto, CA 94306-2024 (US)
(72) Inventor: Jogesh Warrior, Mountain View, California 94040 (US); John C.Eidson, Palo Alto, California 94303 (US); Jerry Liu, Sunnyvale, California 94086 (US)
(74) Representative: Exell, Jonathan Mark

(56) References cited:
- US-A1- 2003 202 479
- INTANAGONWIWAT C ET AL: "DIRECTED DIFFUSION FOR WIRELESS SENSOR NETWORKING" IEEE / ACM TRANSACTIONS ON NETWORKING, IEEE INC. NEW YORK, US, vol. 11, no. 1, February 2003 (2003-02), pages 2-16, XP001144288 ISSN: 1063-6692
- CHAKRABARTI A ET AL: "Using predictable observer mobility for power efficient design of sensor networks" INFORMATION PROCESSING IN SENSOR NETWORKS. SECOND INTERNATIONAL WORKSHOP, IPSN 2003. PROCEEDINGS (LECTURE NOTES IN COMPUTER SCIENCE VOL.2634) SPRINGER-VERLAG BERLIN, GERMANY, 2003, pages 129-145, XP002330493 ISBN: 3-540-02111-6

## Description

### TECHNICAL FIELD

The present invention is generally related to distributed sensor systems.

### BACKGROUND

As advances in microelectronics, microsensors, and wireless communications have occurred, new types of distributed measurement systems have been proposed and, in some cases, implemented. It is possible to implement such measurement systems by appropriately implementing the measurement functionality and communication functionality of the sensor devices. In general, the sensor-devices are designed to operate over extended periods using battery power and/or passively generated power (e.g., photo-voltaic resources). Also, the sensor devices generally are designed within relative minimal complexity (e.g., limited computational, memory, and communication resources). Also, the sensor devices of these systems communicate using short-range wireless methods. For example, ad hoc wireless networks (e.g., IEEE 802.11b networks, Bluetooth networks, and/or the like) may be formed by the sensor devices to facilitate the transfer of measurement data. The organization of sensor-devices using short-range wireless communication protocols are referred to as scatter nets, ad hoc sensor nets, pico nets, and/or the like.

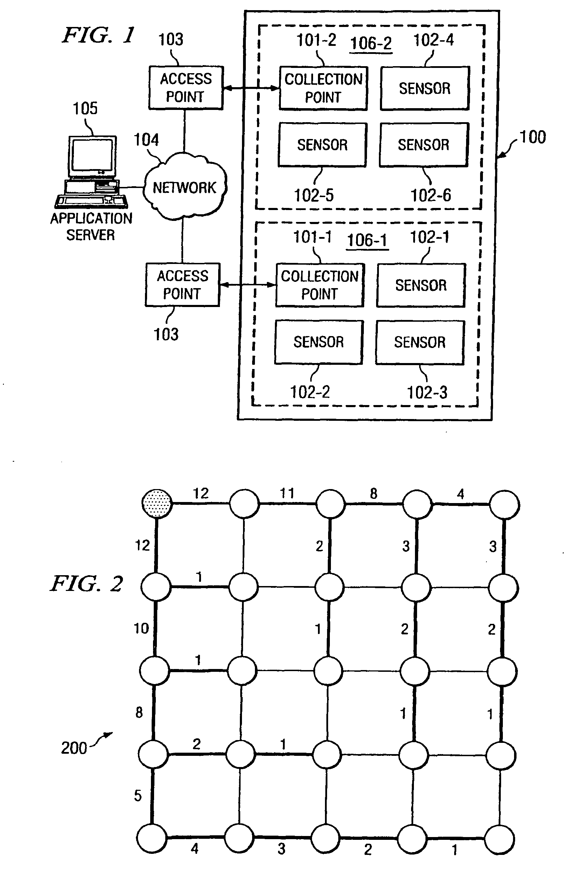

FIGURE 1 depicts a typical distributed sensor system 100 that employs a plurality of sensor devices 102. Sensor system 100 could be used to gather measurements for any number of applications. For example, sensor system 100 could be used to obtain chemical measurements across a city to facilitate environmental monitoring of the city. Depending on the intended purpose of sensor system 100, the number of sensor devices 102 within the system may range from a handful of sensor devices 102 to thousands or more. Collection point devices 101 are disposed on the "edge" of sensor system 100 and are proximately located to access points 103. Using higher-powered radio communications with access points 103, collection point devices 101 enable the measurement data to be forwarded to application server 105 through network 104. Application server 105 processes the data according to higher-level algorithms as appropriate for the intended purpose of sensor system 100.

Within distributed sensor system 100, sensor devices 102 are organized in respective scatter nets (shown as nets 106-1 and 106-2). As shown in FIGURE 1, sensors 102-1, 102-2, and 102-3 communicate with collection point device 101-1 thereby forming net 106-1. Likewise, sensors 102-4, 102-5, and 102-6 communicate with collection point device 101-2 thereby forming net 106-2. Within their respective net 106, sensors 102 utilize low-energy short-range radio communication to forward the measurement data to a respective collection point device 101. The communication between an individual sensor 102 and a respective collection point device 101 need not be direct. For example, sensor 102-3 may forward measurement data to sensor 102-2 which will then forward the data to collection point device 101-1. When relatively large number of sensor devices 102 are employed within a respective scatter net, the number of communications "hops" to collection point device 101 can be significant.

Because of the limited power resources available to sensor devices 102, a number of algorithms have been proposed to direct the communications between sensor devices 102 to route measurement data to a respective collection points 101. Such algorithms attempt to minimize the energy cost associated with the scatter net communications thereby preserving battery power. One such algorithm employs a "spanning tree transport" scheme. The spanning tree transport scheme minimizes the number of hops between a respective sensor device 102 and its collection point device 101 as shown in reference to net 200 of FIGURE 2. The numbers associated with each internode link in net 200 depict the number of nodes of net 200 that communicate via a respective link.

A. Chakrabarti et al. in "Using predictable Observer mobility for power efficient desing of Sensor Networks", Proceedings of IPSN 2003, describe a method for saving power in sensor networks based on predicted mobility of the observer.

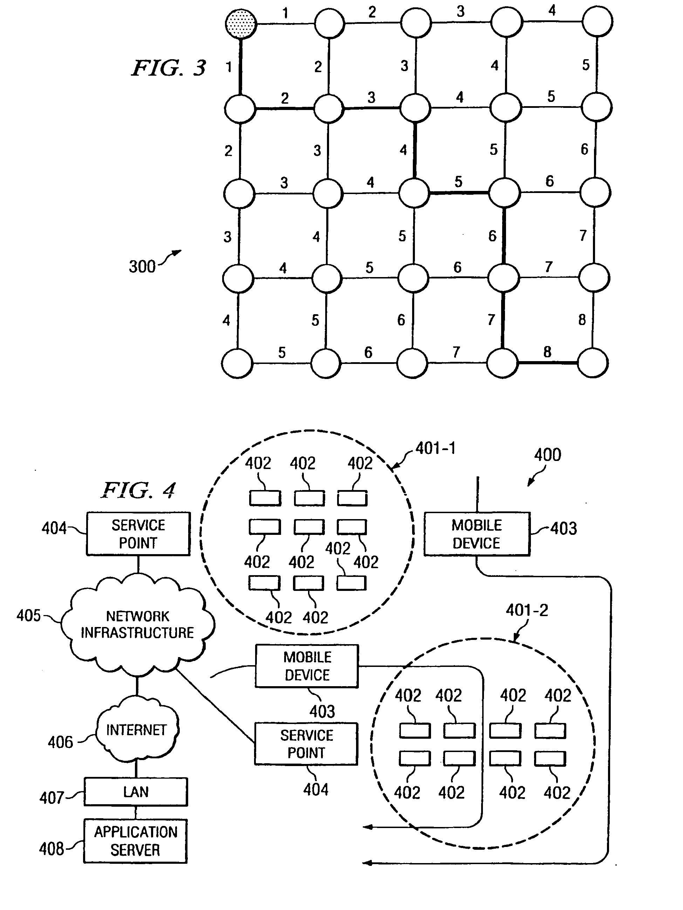

Alternatively, a "diffusion" algorithm may be employed in which data is forwarded toward the next sensor device 102 that is "closest" to the collection point device 101 as shown in reference to net 300 of FIGURE 3. The numbers associated with each internode link in net 300 represent the total "hop" distance to the collection point node. When the next hop can be selected from more than one sensor device, the forwarding direction can be selected randomly from the multiple options.

C. Intanagon wiwat et al. in "Directed Diffusion for Wireless Sensor Networking", IEEE/ACM Transactions on Networking vol. 11 no. 1, February 2003, disclose a method employing a directed diffusion algorithm energy saving.

### SUMMARY

Representative embodiments are generally directed to distributed sensor systems that forward measurement data using mobile devices as access point devices. For example, a cellular phone or other wireless device may perform the access point services. As the mobile device travels through a distributed sensor system, the mobile device transmits a signal indicating that the mobile device is attempting to access measurement data. Nodes in the respective scatter nets of the distributed sensor system respond to the signal by establishing wireless communication with the mobile device and thereafter communicating the measurement data. The mobile device may then utilize another network (e.g., a cellular network) to forward the collected data to one or several application servers.

Because the communication of measurement data to application servers occurs through mobile devices, the spatial characteristics associated with communication with the mobile devices are not statically defined. Additionally, the timing of the access attempts cannot be deterministically known. Representative embodiments determine the probabilistic characteristics between mobile devices and nodes of the scatter nets during the operation of a distributed sensor system. Specifically, certain nodes will be identified as possessing greater probability of future access upon the basis of detected access attempts. Upon the basis of the probabilistic characteristics, collection points are selected. Measurement data routing between nodes of the scatter nets to collection points occurs according to the probabilistic characteristics. In addition to the probabilistic characteristics of the spatial relationships, similar methods of collection point selection and measurement data routing may be employed for timing relationships associated with mobile devices.

### BRIEF DESCRIPTION OF THE DRAWINGS

FIGURE 1 depicts a typical distributed sensor system.

FIGURE 2 depicts a typical scatter net that performs spanning tree data routing.

FIGURE 3 depicts a typical scatter net that performs diffusion routing.

FIGURE 4 depicts a distributed sensor network according to one representative embodiment.

FIGURE 5 depicts a scatter net that includes a high probability transport path according to one representative embodiment.

FIGURE 6 depicts a flowchart for distributing probabilities of future access according to one representative embodiment.

FIGURE 7 depicts another scatter net that includes a high probability transport path according to one representative embodiment.

FIGURE 8 depicts a flowchart for operation of a sensor device in a sensor net according to one representative embodiment.

FIGURE 9 depicts a sensor device according to one representative embodiment.

### DETAILED DESCRIPTION

Representative embodiments employ mobile devices to perform access point services for a distributed sensor system. In one representative embodiment, cellular phones communicate with sensor devices in scatter nets to obtain measurement data and communicate that data to application servers using the cellular network infrastructure. Although one embodiment employs cellular phones to perform access point services, the present invention is not so limited. Representative embodiments may employ personal digital assistants (PDAs), laptop computers, other consumer electronic devices, commercial/industrial devices (e.g., fork lifts), vehicles, or any other mobile devices to which suitable communication resources can be integrated or attached. Further details regarding accessing sensors of a distributed sensor system using mobile devices may be obtained in U.S. Patent Application US 2005/0057370 ), entitled "System and Method for Using Mobile Collectors for Accessing Wireless Sensor Network," which is incorporated herein by reference.

FIGURE 4 depicts system 400 in which mobile devices obtain measurement data from scatter nets according to one representative embodiment. As shown in FIGURE 4, scatter nets 401-1 and 401-2 include a plurality of sensor devices 402. Sensor devices 402 obtain measurement data upon command, according to a time schedule, and/or by any other suitable scheme. Sensor devices 402 include short-range radio communication capabilities that enable sensor devices 402 to organize themselves into scatter nets 401. Some or all sensor devices 402 include communication resources to communicate with mobile devices 403 (e.g., cellular phones).

From time to time, mobile devices 403 may be brought within communication range of portions of scatter nets 401-1 and 401-2. Mobile devices 403 broadcast a suitable signal that indicates that mobile devices 403 are attempting to obtain measurement data. Each sensor device 402 that is capable of communicating with mobile devices 403 and that receives the broadcast signal updates a suitable log to enable the future probability of access to be determined. The log may include an entry for each access attempt over a suitable time window. Also, the entries in the log may be time-stamped to enable the probability of access to be correlated to temporal information. Additional information needed for particular forms of the probability and cost function calculations may also be entered into the log (for example, received signal strength, battery levels, available memory capacity, and/or the like). The maintenance of a suitable log occurs whether or not the respective sensor devices 402 are currently serving as collection points.

In addition, sensor devices 402 that are currently performing collection point services communicate stored measurement data in response to the broadcast signal. Mobile devices 403 then communicate measurement data via service points 404 to application server 408 using a suitable communication mechanism (e.g., cellular services). For example, mobile devices 403 may use a data packet communication protocol to communicate the data to service points 404 (e.g., base stations of a cellular network). The data may be communicated through network infrastructure 405 (e.g., a cellular infrastructure) and Internet 406 to local area network (LAN) 407. One or several application servers 408 connected via LAN 407 may store and process the measurement data.

From time to time, sensor devices 402 that are capable of communicating with mobile devices 403 examine their respective logs of access attempts. Each of these sensor devices 402 calculates the probability of future access by a mobile device 403 using the recorded information. Information related to probability of access is then distributed through scatter nets 401. Collection points may be selected according to the distributed information. Also, measurement data may be forwarded through scatter nets 402 using a routing scheme based upon the distributed information. In other embodiments, knowledge regarding future probabilities of access may be maintained by devices other than sensor devices 402. For example, by analysis of cellular or other activity patterns, it may be determined that the probabilities for various sensor devices 402 may be relatively high for certain times of the day. Mobile devices 403 may be used to communicate future access probabilities to sensor devices for the collection point selection and measurement data routing algorithms.

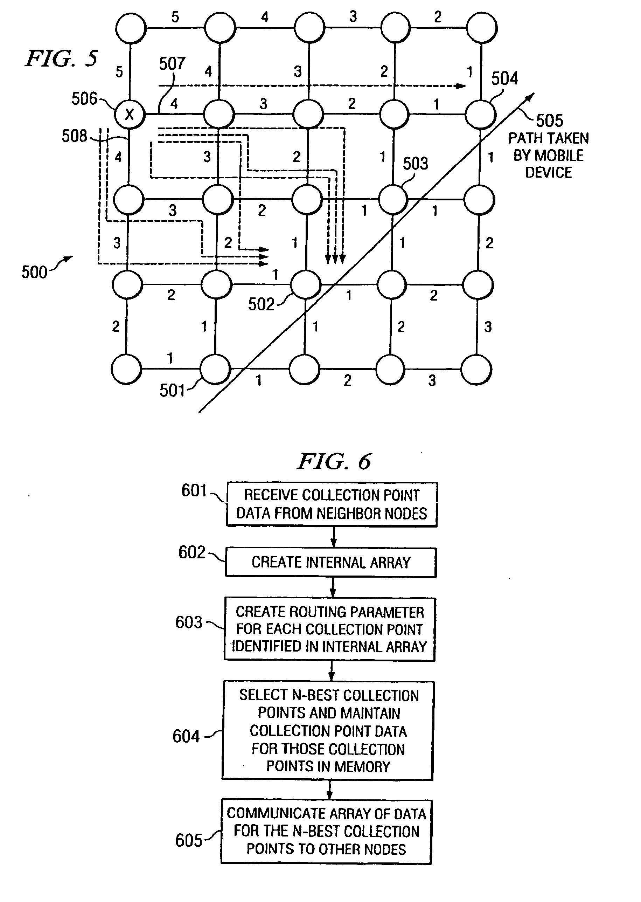

FIGURE 5 depicts scatter net 500 to illustrate routing of measurement data using access probabilities according to one representative embodiment. For the sake of illustration, suppose scatter net is located near a highway. At any point in time, a mobile device could broadcast a suitable signal to access measurement data from any location along the highway. Accordingly, the exact spatial location of the mobile device cannot be known before an access attempt is made. However, because of the path 505 traversed by mobile devices, the probability of access to specific nodes differs by an appreciable amount. Nodes 501-504 of scatter net 500 are located closest to path 505 and are within potential communication range of a mobile device. Accordingly, access attempts will be repetitively experienced by nodes 501-504 and no access attempts will be experienced by the other nodes.

Representative embodiments cause access attempts to be recorded. Upon the basis of the recorded access attempts, the probability of a future access over an appropriate time window for each node is calculated. This probability may be manifested as a distribution function, explicit probabilities, models or equations, or their equivalents. Supplementary information appropriate for proper interpretation the probability may also be included in the probability information. The probability information is distributed through scatter net 500. If the probability information is determined to change relatively infrequently, the distribution of information may occur by communicating changes in the probabilities of future access. By communicating such difference information, the amount of energy expended by such communication activities will be reduced. One representative embodiment would cause nodes 501-504 to act as collection points and cause all other nodes to forward data to the collection points in response to the distribution of access probability information. The selection of multiple collection points in response to observed access attempts operates in contrast to the architecture shown in FIGURE 1. As previously discussed in regard to FIGURE 1, a single collection point is typically deployed within a given net.

Routing of measurement data to multiple nodes selected according to their respective probabilities of access may occur according to a number of algorithms. In one representative embodiment, routing of measurement data occurs by communicating the hop distance from each node to the closest collection point. As shown in FIGURE 5, each link between nodes is associated with a number that represents that number of hops from a given node along the respective link to the closest collection point. For example, reference is made to node 506. Preceding along link 507 to the "right" of node 506, four hops may be traversed to reach a collection point. Also, preceding along the link 508 "below" node 506, four hops may be traversed to reach a collection point. When one and only one link exhibits the lowest hop distance, measurement data may be routed using that link. When multiple links exhibit the lowest hop distance, the selection between the links may occur randomly. The random selection between links may cause the measurement data to diffuse through scatter net 500 thereby mitigating data congestion experienced by subsets of the links of scatter net 500. Using this routing algorithm, the probabilities of a given datum from node 506 being routed to nodes 501-504 are 4/15, 6/15, 4/15, and 1/15 respectively. The probabilities for other nodes will vary depending upon their location relative to nodes 501-504.

The discussion of FIGURE 5 has assumed a relatively low complexity net topology and that each node can only communicate with a limited number of nodes that are separated by a single link. In some applications, these assumptions are not strictly correct. Nonetheless, the discussion of selecting collection nodes and routing data to nodes according to these assumptions does not limit the generality of the application of such algorithms to more complicated topologies and coverage patterns. Specifically, the ability of a single node to be able to communicate to multiple other nodes may be modeled by modifying the topological representation of the scatter net. The establishment of a point-to-point connection model of a scatter net may be performed by known higher level protocols. Such protocols typically involve employing node identifiers and directional distinguishing mechanisms (e.g., directional antenna, relative signal timing mechanisms, range of coverage mechanisms, or the like).

Additionally, it has been assumed that a single high probability transport path exists for the sake of discussion. Representative embodiments may enable high probability nodes to be identified for any number of transport paths or any type of spatial distribution. Also, as shown in FIGURE 5, the topology of scatter net 500 is static. Representative embodiments are not so limited. Collection points may be selected using probabilities of access in distributed sensor systems in which nodes move relative to each other, nodes switch their presence from one net to another, nodes are dropped from a scatter net entirely, and/or the like. Specifically, by repetitively distributing information related to the probabilities of access within a respective net, representative embodiments enable collection points to be dynamically selected in response to changing scatter net configurations.

FIGURE 6 depicts a flowchart for distribution of information related to probabilities of future access to collection points according to one representative embodiment. In step 601, a particular node receives collection point data from some neighbor nodes. For example, a neighbor node may provide the particular node with an array of collection point data. Each entry in the array may contain the identifier of a collection point, its respective probability of access, and the hop distance to the collection point from the neighbor node. In step 602, an internal array is created from all of the received entries. In step 603, a routing parameter is created for each unique collection point identified in the internal array. The routing parameter for a collection point equals the probability of access to the collection point minus a cost function of the hop distance to that collection point. The cost function may be non-linear (e.g., logarithmic). Additionally, other function variables may be employed including the time of day, battery strength of the current node, average length of payloads, and/or any other suitable factor.

In step 604, the N-best collection points in terms of the calculated routing parameters are selected and maintained in memory. Future measurement data routing will occur according to the collection points identified in memory. A greater number of N-best collection points selected will increase the number of collection points that are reachable by nodes in the interior of a scatter net. However, a greater number of points will also increase the amount of energy expended in distributing the collection point information. Accordingly, these considerations may be balanced in view of the characteristics of a particular distributed sensor system. In step 605, an array of the collection points selected in step 604 are communicated to other nodes. The array includes the identifiers of the selection collection points, their probabilities of access, and the hop distance from the current node.

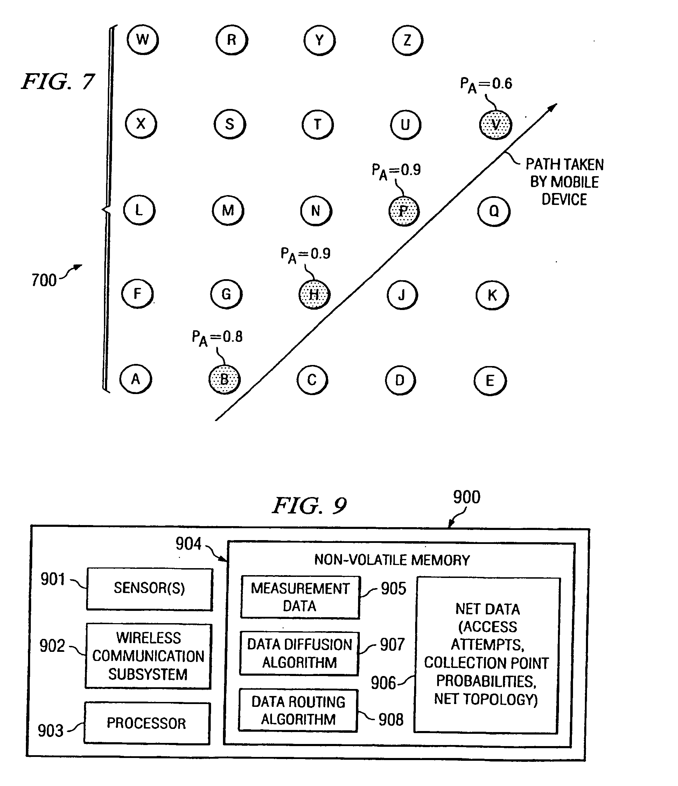

Referring to FIGURE 7, scatter net 700 is shown to contain a plurality of nodes (identified as nodes A-Z). In scatter net 700, nodes B, H, P, and V are the only nodes that contain non-zero probabilities of access. Specifically, nodes B, H, P, and V possess probabilities (P_{A}) of access of 0.8, 0.9, 0.9, and 0.6 respectively. Assuming a linear cost function that equals .15 times the number of hops to the collection point for the algorithm shown in FIGURE 6, the following table identifies the internal collection point information for selected nodes:

| Node | Transmit information ID:Probability:hops |
|---|---|
| B | B:0.8:1, H:0.9:2 |
| H | H:0.9:1, P:0.9:2 |
| P | P:0.9:1, H:0.9:2 |
| V | V:0.6:1, P:0.9:1 |
| A | B:0.8:2, H:0.9:3 |
| G | B:0.8:2, H:0.9:2 |
| N | H:0.9:2, P:0.9:2 |
| U | P:0.9:2, H:0.9:3 |
| F | H:0.9:3, B:0.8:3 |
| M | H:0.9:3, P:0.9:3 |
| T | H:0.9:3, P:0.9:3 |
| L | H:0.9:4, P:0.9:4 |
| S | H:0.9:4, P:0.9:4 |
| X | H:0.9:5, P:0.9:5 |

The effect of the cost function is most readily seen in relation to node U. Node U is within one hop of collection points V and P and within two hops of collection point H. Even though H is an additional hop away from node U as compared to node V, node H is maintained in the internal collection point information of node U. Specifically, the routing parameter of node H (0.9 minus 0.15*2) is greater than the routing parameter of node V (0.6 minus 0.15*1).

Routing based upon distributed probability information may occur in a number of ways. For example, a discrete node may retrieve the identifiers of collection points maintained in memory when a node receives or otherwise possesses measurement data to be forwarded. The discrete node may determine which of its links lead to the identified collection points. If multiple links are identified, the discrete node may select between the links randomly. Also, the random selection may be weighted according to the probabilities of access of the respective collection points, the number of hops to the collection points, and/or the like.

Alternatively, source address routing may occur. Specifically, each node that originates measurement data to be forwarded may attach a routing address of a collection point in data packets. The remaining nodes utilize the representation of the scatter net topology to route data packets to the selected collection point using the source addressing. Multiple source addresses may be employed to send the same measurement data to multiple collection points to increase the probability of collection of that data. For example, if the probabilities of access of two collection points (given by P_{A}(N₁) and P_{A}(N₂)) are independent, the probability of access occurring to at least one of the points equals (1-(1-P_{A}(N₁))(1-P_{A}(N₂))). Thus, the collection points could be chosen so that this probability of access exceeds a predetermined threshold. The selection of the multiple collection points may also employ a cost function to address transmission energy costs and other relevant constraints.

To illustrate minimum probability and cost routing, assume that node B possesses a probability of access of 0.7, node H possesses a probability of access of 0.8, and node P possesses a probability of access of 0.9. Also, assume that the cost of transmitting of these nodes is given by 1, 2, and 3 respectively. Then, the following routing table results:

| POINTS | PROBABILITY OF ACCESS TO AT LEAST ONE POINT OF PAIR | COMBINED COST TO ROUTE TO BOTH POINTS |
|---|---|---|
| H,P | 1-(1-0.8)(1-0.9)=0.98 | 3+2=5 |
| B,P | 1-(1-0.7)(1-0.9)=0.97 | 1+3=4 |
| B,H | 1-(-1-0.7)(1-0.8)=0.94 | 1+2=3 |

Thus, if a minimum probability of access to a given data of 0.97 is required, either points (B,P) or (H,P) could be selected. If a minimum cost is additionally selected, then points (B,P) would be selected. Other similar selections could be made depending upon the desired operation of a particular distributed sensor system.

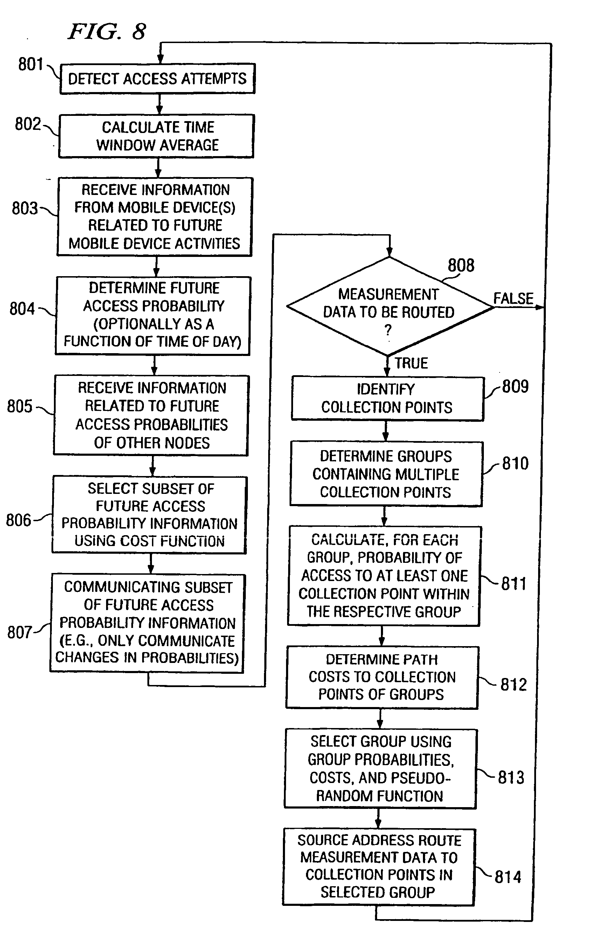

FIGURE 8 depicts a method of operating a sensor net device with a sensor net according to one representative embodiment. In step 801, access attempts by mobile devices are detected. In step 802, a time window average of the access attempts is calculated. In step 803, information from one or several mobile devices is received that is related to future mobile device activities. In step 804, the future access probability for the sensor device is determined using the average and the received information. The future access probability may also be determined as a function of the time of day.

In step 805, information is received that is related to the future access probabilities of other nodes in the sensor net. In step 806, a subset of the future access probabilities is selected using a cost function (see the process flow described with respect to FIGURE 6). In step 807, the subset of future access probability information is communicated to other nodes. In one representative embodiment, only changes in future access probability information is communicated to reduce the energy expended by this activity.

In step 808, a logical comparison is made to determine whether there is measurement data to be routed. If not, the process flow returns to step 801. If there is measurement data to be routed, the process flow proceeds to step 809. In step 809, collection points are identified using, for example, a suitable log stored in memory. In step 810, groups of the collection points are identified. In step 811, for each group, the probability of access to at least one collection point in the respective group is calculated. In step 812, path costs to collection points in the groups are determined. In step 813, one of the groups is selected using the group probabilities, path costs, and a pseudo-random function. The pseudo-random function may be used to diffuse data through non-optimal routes to avoid link congestion. In step 814, source address routing is employed to communicate the measurement data to the collections points in the selected group. From step 814, the process flow returns to step 801.

FIGURE 9 depicts sensor device 900 according to one representative embodiment. Sensor device 900 includes one or several sensors 901. Sensor device 900 further includes wireless communication subsystem 902 such as an IEEE 802.11b subsystem, a Bluetooth subsystem, and/or the like. Sensor device 903 further includes processor 903. Sensor device 900 includes non-volatile memory 904 (that may be implemented using any suitable computer readable medium/media) to store measurement data 905 and other pertinent information.

Under the control of software instructions, processor 903 performs a number of tasks such as the activities shown in FIGURES 6 and 8. For example, processor 903 may detect access attempts by mobile devices using wireless communication subsystem 902 and record the attempts in net data 906. From time to time, processor 903 may use the recorded access attempts to calculate the probability of future access by a mobile device. Processor 903 may also communicate data related to the probabilities of future access using the executable instructions of data diffusion algorithm 907. Additionally, processor 903 may route measurement data using the executable instructions of data routing algorithm 908. Data diffusion algorithm 907 and data routing algorithm 908 may operate using data stored in net data 906 such as collection point access probabilities, net topology information, and/or the like. Although one embodiment has shown sensor device 900 implemented using processor 903 and executable instructions, other implementations may be selected according to representative embodiments. For example, integrated circuit functionality may be used to implemented data diffusion algorithm and data routing algorithm if desired.

Some representative embodiments enable a number of advantages. For example, by selecting collection points according to the probability of future access by a mobile device, the power requirements of a distributed sensor system are lessened. Power resources may be directed to other activities such as computational algorithms for processing measurement data within the sensor nets. Accordingly, some representative embodiments enable distributed sensor systems to be applied to a broader range of potential applications.

## Claims

1. A method of operating a sensor net (401), comprising:
detecting access attempts by one or several mobile devices (403) to multiple nodes (404) within said sensor net;
calculating a respective probability of future access by a mobile device for each of said multiple nodes in response to said detecting;
communicating information related to said calculated probabilities through said sensor net; and
routing measurement data for collection to respective ones of said multiple nodes using said calculated probabilities.

2. The method of claim 1 wherein said communicating calculated probabilities comprises:
receiving a first portion of said information at a first node in said sensor net;
selecting a second portion from said first portion of information using calculated probabilities of future access; and
transmitting said second portion from said first node to a second node in said sensor net.

3. The method of claim 2 wherein said selecting removes information from said first portion using a cost function.

4. The method of claim 1 wherein said routing comprises:
selecting multiple destination collection points using said communicated information.

5. The method of claim 4 wherein said selecting multiple destination collection points comprises:
calculating a group probability of access to at least one of said multiple destination collection points; and
comparing said calculated group probability of access to a threshold value.

6. The method of claim 1 wherein said routing comprises:
using a pseudo-random algorithm to distribute measurement data beyond optimal paths identified using said communicated information.

7. A sensor device (900) for operation in a sensor net (401), comprising:
means for detecting and recording attempts to access measurement data by mobile devices;
means for calculating a probability of future access by a mobile device to said sensor device using said recorded access attempts;
means for receiving information related to probabilities of future access associated with other sensor devices within said sensor net;
means for communicating information related to probabilities of future access to other sensor devices (907); and
means for routing measurement data within said scatter net in response to said means for calculating and said means for receiving (908).

8. The sensor device of claim 7 wherein said means of communicating information related to probabilities of future access to other sensor devices are adapted to limit communication to information associated with a subset of sensor devices within said scatter net.

9. The sensor device of claim 8 wherein said means for routing are configured to select a plurality of collection points using said source address routing.

10. The sensor device of claim 8 wherein said means for routing includes randomization logic for directing measurement data beyond optimal paths defined by probabilities of future access to other sensor devices.

## Patentansprüche

1. Ein Verfahren zum Betreiben eines Sensornetzes (401), das folgende Schritte aufweist:.
Erfassen von Zugriffsversuchen durch eine oder mehrere mobile Vorrichtungen (403) auf mehrere Knoten (404) innerhalb des Sensornetzes;
Berechnen einer jeweiligen Wahrscheinlichkeit eines zukünftigen Zugriffs durch eine mobile Vorrichtung für jeden der mehreren Knoten ansprechend auf das Erfassen;
Kommunizieren von Informationen bezüglich der berechneten Wahrscheinlichkeiten durch das Sensornetz hindurch; und
Leiten von Messdaten für eine Sammlung zu jeweiligen der mehreren Knoten unter Verwendung der berechneten Wahrscheinlichkeiten.

2. Das Verfahren gemäß Anspruch 1, bei dem das Kommunizieren von berechneten Wahrscheinlichkeiten folgende Schritte aufweist:
Empfangen eines ersten Abschnitts der Informationen an einem ersten Knoten in dem Sensornetz;
Auswählen eines zweiten Abschnitts aus dem ersten Abschnitt von Informationen unter Verwendung berechneter Wahrscheinlichkeiten eines zukünftigen Zugriffs; und
Senden des zweiten Abschnitts von dem ersten Knoten zu einem zweiten Knoten in dem Sensornetz.

3. Das Verfahren gemäß Anspruch 2, bei dem das Auswählen Informationen unter Verwendung einer Kostenfunktion aus dem ersten Abschnitt entfernt.

4. Das Verfahren gemäß Anspruch 1, bei dem das Leiten folgenden Schritt aufweist:
Auswählen von mehreren Bestimmungsortsammelpunkten unter Verwendung der kommunizierten Informationen.

5. Das Verfahren gemäß Anspruch 4, bei dem das Auswählen von mehreren Bestimmungsortsammelpunkten folgende Schritte aufweist:
Berechnen einer Gruppenwahrscheinlichkeit eines Zugriffs auf zumindest einen der mehreren Bestimmungsortsammelpunkte; und
Vergleichen der berechneten Gruppenwahrscheinlichkeit eines Zugriffs mit einem Schwellenwert.

6. Das Verfahren gemäß Anspruch 1, bei dem das Leiten folgenden Schritt aufweist:
Verwenden eines Pseudozufallsalgorithmus, um Messdaten über optimale Wege zu verteilen, die unter Verwendung der kommunizierten Informationen identifiziert sind.

7. Eine Sensorvorrichtung (900) für einen Betrieb in einem Sensornetz (401), die folgende Merkmale aufweist:
eine Einrichtung zum Erfassen und Aufzeichnen von Versuchen, durch mobile Vorrichtungen auf Messdaten zuzugreifen;
eine Einrichtung zum Berechnen einer Wahrscheinlichkeit eines zukünftigen Zugriffs durch eine mobile Vorrichtung auf die Sensorvorrichtung unter Verwendung der aufgezeichneten Zugriffsversuche;
eine Einrichtung zum Empfangen von Informationen bezüglich Wahrscheinlichkeiten eines zukünftigen Zugriffs, die anderen Sensorvorrichtungen innerhalb des Sensornetzes zugeordnet sind;
eine Einrichtung zum Kommunizieren von Informationen bezüglich Wahrscheinlichkeiten eines zukünftigen Zugriffs auf andere Sensorvorrichtungen (907); und
eine Einrichtung zum Leiten von Messdaten innerhalb des Streunetzes ansprechend auf die Einrichtung zum Berechnen und die Einrichtung zum Empfangen (908).

8. Die Sensorvorrichtung gemäß Anspruch 7, bei der die Einrichtung zum Kommunizieren von Informationen bezüglich Wahrscheinlichkeiten eines zukünftigen Zugriffs auf andere Sensorvorrichtungen angepasst ist, um eine Kommunikation auf Informationen zu begrenzen, die einem Teilsatz von Sensorvorrichtungen innerhalb des Streunetzes zugeordnet sind.

9. Die Sensorvorrichtung gemäß Anspruch 8, bei der die Einrichtung zum Leiten konfiguriert ist, um eine Mehrzahl von Sammelpunkten unter Verwendung des Quelladressleitens auszuwählen.

10. Die Sensorvorrichtung gemäß Anspruch 8, bei der die Einrichtung zum Leiten eine Randomisierungslogik zum Richten von Messdaten über optimale Wege umfasst, die durch Wahrscheinlichkeiten eines weiteren Zugriffs auf andere Sensorvorrichtungen definiert sind.

## Revendications

1. Procédé d'exploitation d'un réseau de capteurs (401), comprenant les étapes consistant à :
- détecter des tentatives d'accès par un ou plusieurs dispositifs mobiles (403) à des noeuds (404) multiples à l'intérieur dudit réseau de capteurs ;
- calculer une probabilité respective d'accès futur par un dispositif mobile pour chacun desdits noeuds multiples, en réponse à ladite étape consistant à détecter ;
- communiquer des informations ayant rapport auxdites probabilités calculées à travers ledit réseau de capteurs ; et
- router des données de mesure pour une collection vers des noeuds respectifs desdits noeuds multiples en utilisant lesdites probabilités calculées.

2. Procédé selon la revendication 1, dans lequel ladite étape consistant à communiquer des probabilités calculées comprend les étapes consistant à :
- recevoir une première portion desdites informations au niveau d'un premier noeud dans ledit réseau de capteurs ;
- sélectionner une deuxième portion à partir de ladite première portion d'informations en utilisant des probabilités calculées d'accès futur ; et
- transmettre ladite deuxième portion depuis ledit premier noeud à un deuxième noeud dans ledit réseau de capteurs.

3. Procédé selon la revendication 2, dans lequel ladite étape consistant à sélectionner enlève des informations depuis la première fonction en utilisant une fonction de coût.

4. Procédé selon la revendication 1, dans lequel ladite étape consistant à router comprend l'étape consistant à :
- sélectionner des points multiples de collection de destinations en utilisant lesdites informations communiquées.

5. Procédé selon la revendication 4, dans lequel ladite étape consistant à sélectionner des points multiples de collection de destinations comprend les étapes consistant à :
- calculer une probabilité d'accès, de groupe, à au moins l'un desdits points multiples de collection de destinations ; et
- comparer ladite probabilité calculée d'accès, de groupe, à une valeur seuil.

6. Procédé selon la revendication 1, dans lequel ladite étape consistant à router comprend l'étape consistant à :
- utiliser un algorithme pseudo-aléatoire afin de distribuer des données de mesure au-delà de chemins optimaux identifiés en utilisant lesdites informations communiquées.

7. Dispositif de capteur (900) destiné à un fonctionnement dans un réseau de capteurs (401), comprenant :
des moyens destinés à détecter et à enregistrer des tentatives d'accéder à des données de mesure d'accès par des dispositifs mobiles ;
des moyens destinés à calculer une probabilité d'accès futur, par un dispositif mobile, audit dispositif de capteur en utilisant lesdites tentatives d'accès enregistrées ;
des moyens destinés à recevoir des informations ayant rapport à des probabilités d'accès futur associées à d'autres dispositifs de capteur à l'intérieur dudit réseau de capteurs ;
des moyens destinés à communiquer des informations ayant rapport à des probabilités d'accès futur à d'autres dispositifs de capteur (907) ; et
des moyens destinés à router des données de mesure à l'intérieur dudit réseau éclaté en réponse audit moyen destiné à calculer et audit moyen destiné à recevoir (908).

8. Dispositif de capteur selon la revendication 7, dans lequel lesdits moyens destinés à communiquer, à d'autres dispositifs de capteur, des informations ayant rapport à des probabilités d'accès futur sont adaptés de manière à limiter la communication à des informations associées à un sous-ensemble de dispositifs de capteur à l'intérieur dudit réseau éclaté.

9. Dispositif de capteur selon la revendication 8, dans lequel lesdits moyens destinés à router sont configurés de manière à sélectionner une pluralité de points de collection en utilisant ledit routage à l'adresse source.

10. Dispositif de capteur selon la revendication 8, dans lequel lesdits moyens destinés à router incluent une logique de randomisation, destinée à diriger les données de mesure au-delà de chemins optimaux définis par des probabilités d'accès futur à d'autres dispositifs de capteurs.
